# EUROPEAN PATENT APPLICATION

(11) **EP 4 592 806 A1**
(43) Date of publication of application: **30.07.2025**
(21) Application number: 23867452.7
(22) Date of filing: 18.09.2023
(51) Int. Cl.: G06F 3/0481

(54) **HUMAN-COMPUTER INTERACTION METHOD, DISPLAY METHOD, APPARATUS, AND DEVICE**

(30) Priority: 19.09.2022 CN 202211138171; 22.09.2022 CN 202211160521
(71) Applicant: Beijing Zitiao Network Technology Co., Ltd., Beijing 100190 (CN)
(72) Inventor: FANG, Chi, Beijing 100028 (CN); LU, Xiaochuang, Beijing 100028 (CN); MA, Qian, Beijing 100028 (CN); LI, Xiaolin, Beijing 100028 (CN); JI, Liyue, Beijing 100028 (CN); ZHOU, Xinkai, Beijing 100028 (CN); ZHAO, Wenqi, Beijing 100028 (CN)
(74) Representative: Dentons UK and Middle East LLP
(86) International application number: PCT/CN2023/119415
(87) International publication number: WO 2024/061163

(57) **Abstract**

Embodiments of the present disclosure relate to a human-computer interaction method, a display method, an apparatus, and a device. The human-computer interaction method comprises: when receiving an instruction of opening a first application, displaying a first application interface, wherein the first application interface comprises a main interface display area and an associated display area, the associated display area is used for displaying a plurality of candidate function entries, and the main interface display area is used for displaying a display page of a currently called function (301); in response to an instruction of opening a target function entry in the associated display area, closing the display page of the currently called function, and displaying a function entry of the currently called function in the associated display area (302); and displaying a display page of a target function in the main interface display area (303). According to the embodiments of the present disclosure, functional pages having different functions can be rapidly switched on the basis of triggering of the function entries, and the switching effect of different functions in a "tile" form is realized, thereby improving the switching smoothness and switching efficiency between the different functions.

## Description

This application claims priority to Chinese Patent Application No. 202211138171.1, filed on September 19, 2022, and claims priority to Chinese Patent Application No. 202211160521.4, filed on September 22, 2022, which are incorporated herein by reference in their entireties as a part of this application.

### TECHNICAL FIELD

The present disclosure relates to a field of virtual reality technologies, and in particular, to a human-computer interaction method, a display method, an apparatus, and a device.

### BACKGROUND

The virtual reality (Virtual Reality, VR) technology, also known as a virtual environment, a spiritual realm or an artificial environment, is a technology of generating, by using a computer, a virtual world that can directly impose visual, auditory, and tactile sensations on a participant, and that allows the participant to interactively observe and operate. Improving operating experience of VR becomes a mainstream.

In the related technology, an application operation can be implemented in a virtual reality space based on the virtual reality technology. An application interface is displayed in the virtual reality space in the form of a spatial virtual screen. A user implements an application operation on an application interface by using a virtual control device (such as a handle). When a plurality of function services are provided in the application, a current function page is closed by using a virtual control device, to open another required function service.

However, when the foregoing plurality of function services are switched, the current function page needs to be manually closed, and a next function service that needs to be opened is manually opened, and efficiency of switching between the function services is low.

### SUMMARY

In order to resolve the foregoing technical problem or at least partially resolve the foregoing technical problem, the present disclosure provides a human-computer interaction method, an apparatus, and a device. In embodiments of the present disclosure, switching between different functions is implemented in the form of "tiles", to improve smoothness and efficiency of function switching.

The embodiments of the present disclosure provide a human-computer interaction method, and the method comprises: displaying a first application interface when receiving an instruction for opening a first application, in which the first application interface comprises a main interface display area and an associated display area, the associated display area is used to display a plurality of candidate function entries, and the main interface display area is used to display a display page of a currently invoked function; in response to an instruction for opening a target function entry in the associated display area, folding the display page of the currently invoked function, and displaying a function entry of the currently invoked function in the associated display area; and displaying a display page of the target function in the main interface display area.

The embodiments of the present disclosure further provide a method for displaying prompt information, and the method comprises: determining a target display area according to a field of view of a user in a display interface; and displaying a prompt information interface in the target display area, in which the prompt information interface comprises at least one function control related to display content of the display interface.

The embodiments of the present disclosure further provide a human-computer interaction apparatus, and the apparatus comprises:
a first display module, configured to display a first application interface when receiving an instruction for opening a first application, in which the first application interface comprises a main interface display area and an associated display area, the associated display area is used to display a plurality of candidate function entries, and the main interface display area is used to display a display page of a currently invoked function; a second display module, configured to in response to an instruction for opening a target function entry in the associated display area, fold the display page of the currently invoked function, and display a function entry of the currently invoked function in the associated display area; and a third display module, configured to display a display page of the target function in the main interface display area.

The embodiments of the present disclosure further provide an electronic device, in which the electronic device comprises: a processor; and a memory, configured to store instructions that can be executed by the processor, in which the processor is configured to read the executable instructions from the memory, and execute the executable instructions, to implement the human-computer interaction method provided by the embodiments of the present disclosure.

The embodiments of the present disclosure further provide a computer-readable storage medium, in which the computer-readable storage medium stores a computer program, and the computer program is used to perform the human-computer interaction method provided by the embodiments of the present disclosure.

Technical solutions provided by the embodiments of the present disclosure have the following advantages compared with the prior art:

In the human-computer interaction solutions provided by the embodiments of the present disclosure, the first application interface is displayed when receiving the instruction for opening the first application. The first application interface includes the main interface display area and the associated display area, the associated display area is used to display a plurality of candidate function entries, and the main interface display area is used to display a display page of a currently invoked function. In response to the instruction for opening the target function entry in the associated display area, the display page of the currently invoked function is folded, and the function entry of the currently invoked function is displayed in the associated display area, and the display page of the target function is displayed in the main interface display area. In the embodiments of the present disclosure, quick switching between function pages of different functions can be implemented based on triggering of function entries, to implement an effect of switching between different functions in the form of "tiles", thereby improving smoothness and efficiency of switching between different functions.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a schematic diagram of an application scenario of a virtual reality device according to an embodiment of the present disclosure;
Fig. 2 is a schematic diagram of a display scenario of a first application according to an embodiment of the present disclosure;
Fig. 3 is a schematic flowchart of a human-computer interaction method according to an embodiment of the present disclosure;
Fig. 4 is a schematic diagram of a display scenario of a first application interface according to an embodiment of the present disclosure;
Fig. 5 is a schematic diagram of a human-computer interaction scenario according to an embodiment of the present disclosure;
Fig. 6 is a schematic diagram of another human-computer interaction scenario according to an embodiment of the present disclosure;
Fig. 7 is a schematic diagram of a layout of an associated display area according to an embodiment of the present disclosure;
Fig. 8 is a schematic diagram of another human-computer interaction scenario according to an embodiment of the present disclosure;
Fig. 9 is a schematic flowchart of a method for displaying prompt information according to an embodiment of the present disclosure;
Fig. 10A to Fig. 10D are schematic diagrams of positions of a target display area according to an embodiment of the present disclosure;
Fig. 11A to Fig. 11C are schematic diagrams of function controls included in a prompt information interface according to an embodiment of the present disclosure;
Fig. 12 is a schematic flowchart of another method for displaying prompt information according to an embodiment of the present disclosure;
Fig. 13A to Fig. 13F are schematic diagrams of human-computer interaction by using function controls in a prompt information interface according to an embodiment of the present disclosure;
Fig. 14 is a schematic flowchart of still another method for displaying prompt information according to an embodiment of the present disclosure;
Fig. 15A to Fig. 15D are schematic diagrams of positions of display controls according to an embodiment of the present disclosure;
Fig. 15E is a schematic diagram of reducing a prompt information interface according to an embodiment of the present disclosure;
Fig. 16 is a schematic flowchart of yet another method for displaying prompt information according to an embodiment of the present disclosure;
Fig. 17 is a schematic diagram of searching for a target function by using speech information and executing the target function according to an embodiment of the present disclosure;
Fig. 18 is a schematic flowchart of yet another method for displaying prompt information according to an embodiment of the present disclosure;
Fig. 19A and Fig. 19B are schematic diagrams of setting a prompt information interface according to an embodiment of the present disclosure;
Fig. 20 is a schematic block diagram of a human-computer interaction apparatus according to an embodiment of the present disclosure;
Fig. 21 is a schematic block diagram of an apparatus for displaying prompt information according to an embodiment of the present disclosure;
Fig. 22 is a schematic block diagram of an electronic device according to an embodiment of the present disclosure;
Fig. 23 is a schematic block diagram of another electronic device according to an embodiment of the present disclosure;
Fig. 24 is a schematic block diagram of an electronic device HMD according to an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

The names of the messages or information exchanged between multiple devices in the embodiment of the present disclosure are for illustrative purposes only and are not intended to limit the scope of these messages or information.

Related descriptions are provided for some technical concepts or noun concepts involved in the specification.

A virtual reality device is a terminal that implements a virtual reality effect, and may be usually provided as a form of glasses, a head mount display (HMD), and contact lenses, to implement visual perception and perception in another form. Certainly, forms implemented by the virtual reality device are not limited thereto, and may be further miniaturized or large-scaled as needed.

Virtual reality devices disclosed in the embodiments of the present disclosure may include but are not limited to the following types:

A personal computer virtual reality (PCVR) device uses a PC to perform calculations related to virtual reality functions and data output, and the external personal computer virtual reality device uses data output by the PC to achieve virtual reality effects.

A mobile virtual reality device supports disposing a mobile terminal (for example, a smartphone) in various manners (for example, a head mount display equipped with a dedicated card slot), and by connecting to the mobile terminal in a wired or wireless manner, the mobile terminal performs calculations related to a virtual reality function and outputs data to the mobile virtual reality device, for example, to watch a virtual reality video through an APP of the mobile terminal.

An all-in-one virtual reality device has a processor for performing calculations related to virtual functions, and therefore has independent virtual reality input and output functions, and does not need to be connected to a PC or a mobile terminal, which provides a high degree of freedom in use.

A virtual reality object is an object for interaction in a virtual scene, an object that is controlled by a user or a robot program (for example, a robot program based on artificial intelligence) and that is capable of being stationary, moving, and performing various behaviors in a virtual scene, such as a virtual human corresponding to a user in a live streaming scene.

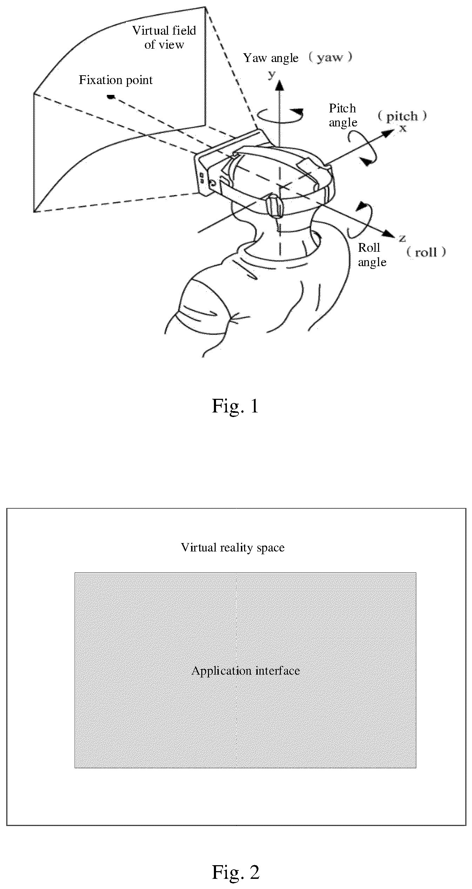

As shown in Fig. 1, the HMD is relatively lightweight, ergonomically comfortable, and provides high-resolution content with low latency. The virtual reality device is provided with a posture detection sensor (such as a nine-axis sensor), which is configured to detect a posture change of the virtual reality device in real time. If the user wears the virtual reality device, when a head posture of the user changes, a real-time posture of the head is transmitted to the processor, to calculate a fixation point of the user's lines of sight in a virtual environment, calculate an image that is in a three-dimensional model of the virtual environment and that is in the user's fixation range (that is, a virtual field of view) based on the fixation point, and display the image on a display screen, making it an immersive experience as if the user is watching in the real environment.

In the embodiment, when the user wears the HMD device and opens a predetermined application, such as a live video streaming application, the HMD device runs a corresponding virtual scene, which may be a simulated environment of the real world, a semi-simulated and semi-fictional virtual scene, or a purely fictional virtual scene. The virtual scene may be any one selected from the group consisting of a two-dimensional virtual scene, a 2.5-dimensional virtual scene, and a three-dimensional virtual scene, and dimensions of the virtual scene are not limited in embodiments of the present disclosure. For example, the virtual scene may include characters, sky, land, ocean, and so on, and the land may include environmental elements such as a desert, a city, and so on. The user may control the virtual object to move in the virtual scene, or may interactively control controls, models, display contents, characters, and the like in the virtual scene by using a handle device, a bare hand gesture, and the like.

In the human-computer interaction method provided in the present disclosure, in a virtual reality space, when the user wears the HMD device, in response to the user's opening operation of the corresponding virtual application, an application interface of the virtual application is displayed in the virtual reality space. As shown in Fig. 2, the application interface of the virtual application makes full use of depth information in the virtual reality space to display the corresponding application interface in the form of an "air virtual screen".

In order to resolve the problem of low switching efficiency of function services related to the virtual application mentioned in the foregoing technology, the present disclosure provides a manner of quickly switching function services, to implement a concept of a multi-task window, and quickly switch back and forth between function pages corresponding to different function services, so as to implement a "smooth" switching effect of switching in the form of "tiles", thereby improving smoothness and efficiency of function switching.

The following describes the human-computer interaction method with reference to specific embodiments.

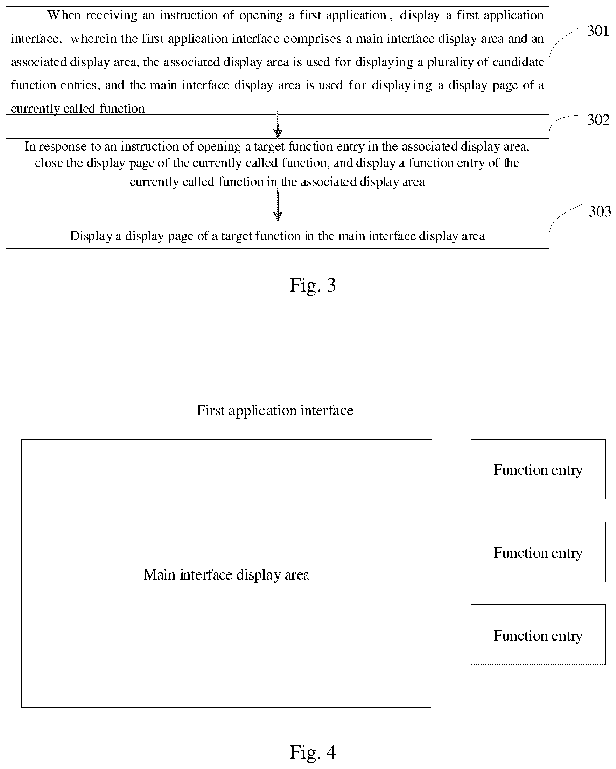

Fig. 3 is a schematic flowchart of a human-computer interaction method according to an embodiment of the present disclosure. The method may be performed by a human-computer interaction apparatus. The apparatus may be implemented by software and/or hardware, and may be usually integrated in an electronic device. As shown in Fig. 3, the method includes the following steps.

Step 301: Displaying a first application interface when receiving an instruction for opening a first application.

The first application interface includes a main interface display area and an associated display area, the associated display area is used to display a plurality of candidate function entries, and the main interface display area is used to display a display page of a currently invoked function.

In which, the first application may be understood as a virtual application or the like that can be watched by a user based on an HMD device when the user wears the HMD device. A function service corresponding to the first application may be implemented by a relevant server, and rendering of displayed related interface content may be implemented based on a Unity engine.

In an embodiment of the present disclosure, when the instruction for opening the first application is received, the first application interface of the first application is displayed. For example, a first display layer is rendered in a virtual reality space, and the first application interface of the first application is displayed in the first display layer. The first application interface includes the main interface display area and the associated display area. The associated display area is used to display a plurality of candidate function entries. The candidate function entries may be function entries of common functions. For example, in some possible embodiments, the function entries of the common functions may include "video application entry", "virtual room entry", "my virtual image management entry", and the like. The common functions corresponding to the candidate function entries may be pre-calibrated by the system, or may be pre-defined by the user based on personal requirements.

The main interface display area is usually used to display a display page of a currently invoked function entry, and the display page may be a current function page of the corresponding function. The associated display area is used to display the plurality of candidate function entries, and the associated display area is usually located outside a right edge of the main interface display area. Display styles of the candidate function entries may include a text, an icon, and the like.

In some possible embodiments, when the candidate function entries include A, B, and C, the associated display area includes an area on the right of the main interface display area. As shown in Fig. 4, the first application interface has a layout of a card combination of "1+3", where the three function entries are displayed in the form of cards in the associated display area. In an actual execution process, when the virtual application is opened, the main interface display area first displays, by default, an application homepage of the first application.

Step 302: In response to an instruction for opening a target function entry in the associated display area, folding the display page of the currently invoked function, and displaying a function entry of the currently invoked function in the associated display area.

In the embodiment of the present disclosure, when the first application interface of the first application is displayed in the virtual reality space, in response to obtaining an invocation operation on a target function entry in the plurality of candidate function entries, in some possible examples, the invocation operation may be performed by a virtual operation device (such as a handle). To be specific, an operation position indication model corresponding to the virtual operation device is displayed in the virtual reality space. The operation position indication model is used to indicate a current operation position of the virtual operation device. The current operation position may be moved through movement of the virtual operation device, or the like. When the current operation position corresponding to the virtual operation device is located at a target function entry, if an entering determining operation of the user is detected, the invocation operation on the target function entry is determined to be obtained. The entering determining operation may be implemented by triggering a preset determining control on the virtual operation device, or may be implemented by inputting a preset speech instruction or performing a preset gesture action, which are is not limited herein.

In some possible embodiments, a plurality of interactive components may alternatively be displayed in the virtual reality space in response to that the user performs a preset interactive component invocation gesture action, where each of the interactive components corresponds to each of the candidate function entries respectively. When a preset trigger operation is performed on a corresponding interactive component, an invocation operation on the target function entry corresponding to the corresponding interactive component is determined to be obtained. The preset trigger operation on the corresponding interactive component may be performed by the virtual operation device. When the current operation position corresponding to the virtual operation device is on the corresponding interactive component, if a trigger determining operation of the user is detected, a trigger operation on the corresponding interactive component is determined to be obtained, where the trigger determining operation may be implemented by triggering the preset determining control on the virtual operation device, may be implemented by inputting a preset speech instruction or performing a preset gesture action, or the like.

Further, in response to the invocation operation on the target function entry in the plurality of candidate function entries, the display page of the currently invoked function is folded, and the function entry of the currently invoked function is displayed in the associated display area.

In an embodiment of the present disclosure, preset folding prompt information of the display page of the currently invoked function to the function entry of the currently invoked function is displayed, and when displaying of the folding prompt information ends, the display page of the currently invoked function is folded as the function entry of the currently invoked function displayed in the associated display area. The folding prompt information is used to indicate folding of the current function page to the corresponding function entry. In different application scenarios, display styles of the folding prompt information are different, and may include a combination of one or more in a text, an animation, and a pattern. After displaying of the folding prompt information ends, the function entry corresponding to the current function page is displayed, to visually indicate to the user that the current function page is folded as the corresponding function entry.

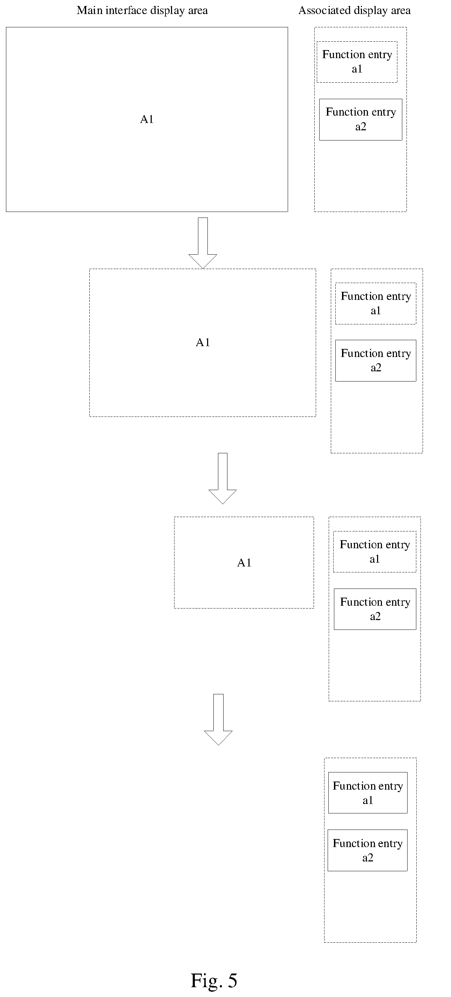

For example, as shown in Fig. 5, when the current display page is a page A1, if the function entry corresponding to A1 is a1, the associated display area is located on the right of the main interface display area, to display folding prompt information of the current display page A1 to a1. The folding prompt information may be that a position of a1 is used as an end point, a position of A1 is used as a start point, and A1 is gradually reduced and A1 is displayed as a1 until the position of a1 is reached.

In this embodiment, the folding prompt information is used for transition, indicating smoothness of switching from the current display page to the corresponding function entry, thereby improving visual experience of the user.

Step 303: Displaying a display page of the target function in the main interface display area.

In an embodiment of the present disclosure, the display page of the target function is displayed in the main interface display area. In this way, a function page of the corresponding function can be displayed in the main interface display area based on a trigger operation on the target function entry, to implement quick unfolding from the entry to the page.

In order to implement the effect of multi-window task parallel execution, in some possible embodiments, a historical function page of the target function entry during last folding is determined, and the historical function page is determined as the display page of the target function. To be specific, a page that is finally displayed last time of the function service corresponding to the target function entry is obtained as the display page of the target function. For example, if the function service corresponding to the target function entry is a movie search function service, and if a corresponding action movie page is displayed when the user enters "search for action movies" in a movie search page during last invocation, the search result page is kept, and the corresponding action movie page is directly displayed during next invocation of the target function entry.

In an embodiment of the present disclosure, unfolding prompt information of the target function entry to the display page of the target function is displayed, and when displaying of the unfolding prompt information ends, the target function entry is unfolded as the display page of the target function displayed in the main interface display area. The unfolding prompt information may include a combination of one or more in a text, an animation, and a pattern. After displaying of the unfolding prompt information ends, the display page of the target function is displayed, to visually indicate to the user that the target function entry is unfolded as the corresponding display page.

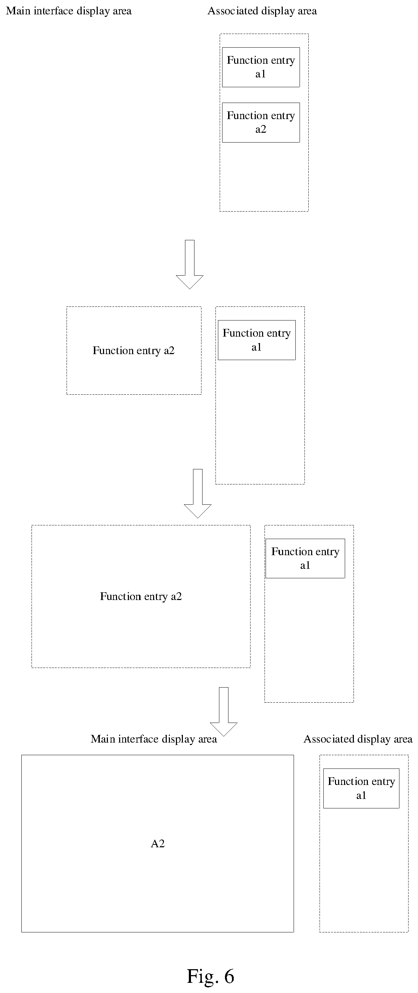

For example, as shown in Fig. 6, when the display page corresponding to the target function entry a2 is a page A2, the associated display area is located on the right of the main interface display area, to display the unfolding prompt information of the target function entry a2 to A2. The unfolding prompt information may be that a position of a2 is used as a start point, a position of A2 is used as an end point, and a2 is gradually enlarged and a2 is displayed as A2 until the position of the main interface display area is reached.

In this embodiment, the unfolding prompt information is used for transition, indicating smoothness of switching from the target function entry to the display page, thereby improving visual experience of the user.

It should be emphasized that, the folding process of the current display page mentioned in the foregoing step 302 to step 303 and the unfolding process of the target function entry may occur simultaneously or at different times. To be specific, the processes of Fig. 5 and Fig. 6 may occur at different times or simultaneously.

Therefore, in the first application interface provided in the embodiment of the present disclosure, display pages of function services corresponding to related function entries may be switched in combinations in the form of "tiles", and function tasks corresponding to a plurality of function services may hang up based on corresponding threads and do not exit when not displayed. Therefore, user experience of multi-task window parallel execution is provided for the user, and the advantage of a VR space is fully used, to implement quick switching between a plurality of function services, thereby improving efficiency of switching between function services.

In conclusion, in the human-computer interaction method provided by the embodiment of the present disclosure, the first application interface is displayed when receiving the instruction for opening the first application. The first application interface includes the main interface display area and the associated display area, the associated display area is used to display a plurality of candidate function entries, and the main interface display area is used to display a display page of a currently invoked function. In response to the instruction for opening the target function entry in the associated display area, the display page of the currently invoked function is folded, and the function entry of the currently invoked function is displayed in the associated display area, and the display page of the target function is displayed in the main interface display area. In the embodiment of the present disclosure, quick switching between function pages of different functions can be implemented based on triggering of function entries, to implement an effect of switching between different functions in the form of "tiles", thereby improving smoothness and efficiency of switching between different functions.

It should be noted that, in an actual execution process, manners of folding the display page of the currently invoked function and displaying the function entry of the currently invoked function in the associated display area are different. Examples are provided as follows.

In some possible embodiments, when the first application is opened, application homepage content of the first application is displayed in the main interface display area by default. The application homepage, used as the "homepage" of the first application, may be usually invoked for display. Therefore, to facilitate invocation of the application homepage, when the current display page is the application homepage of the first application, when displaying of the folding prompt information ends, the current display page is folded as the application homepage function entry displayed in a first associated display sub-area.

When the current display page is not the application homepage of the first application, when displaying of the folding prompt information ends, the current display page is folded as a function entry corresponding to a second associated display sub-area. The first associated display sub-area and the second associated display sub-area are located in different directions of the main interface display area. To be specific, the application homepage function entry corresponding to the application homepage is distinguished from a display position of another function entry, so that the user quickly distinguishes the display position of the function entry corresponding to the application homepage, thereby facilitating quick invocation of the application homepage.

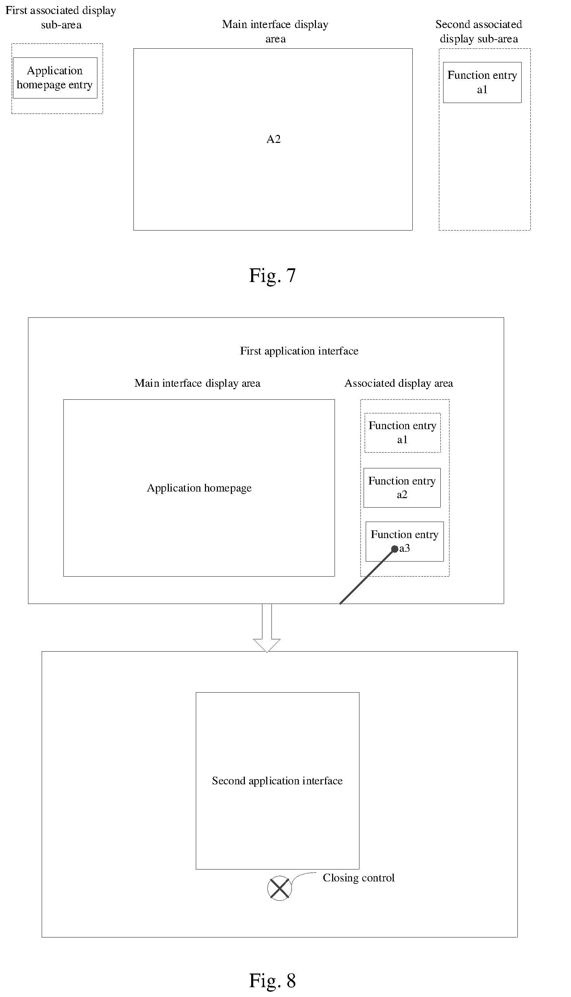

It should be noted that, the first associated display sub-area and the second associated display sub-area are located in different directions of the main interface display area. Different directions may correspond to any two directions of upper, lower, left, and right directions of the main interface display area. For example, as shown in Fig. 7, the first associated display sub-area is located on the upper left corner of the main interface display area, and the second associated display sub-area is located on the right of the main interface display area.

Certainly, in another optional implementation, the function entry corresponding to the application homepage may alternatively be distinguished from the function entry corresponding to another function service in terms of display parameters, to visually distinguish the function entry corresponding to the application homepage from the function entry corresponding to another function service. For example, a color of a display background area of the function entry corresponding to the application homepage is distinguished from a color of a display background area of the function entry corresponding to another function service, or the like.

In addition, in some possible embodiments, when displaying of the folding prompt information ends, when the current display page is folded as a corresponding function entry displayed in the second associated display sub-area, an initial display position of the function entry corresponding to the current display page in the second associated display sub-area may be determined. The initial display position may be understood as a display position of the function entry corresponding to the current display page when the first application is opened. When playing of a folding animation ends, the current display page is folded as the corresponding function entry displayed at the initial display position. To be specific, to facilitate the user in quickly positioning a required function entry, when each display page displayed in the second associated display sub-area is folded, the corresponding function entry is folded at the initial display position for initial display.

In some possible embodiments, display directions of the function entries may alternatively be set in the second associated display sub-area. For example, the plurality of function entries are displayed in the second display sub-area in a top-down order, and a display position of a next function entry in the second associated display sub-area is determined based on the display directions, and the function entry corresponding to the current display page is displayed at the next display position.

In conclusion, in the human-computer interaction method in the embodiment of the present disclosure, the corresponding display page is folded to the corresponding associated display area based on scenario requirements, and the corresponding function entry is displayed in the associated display area, to implement smooth switching between a plurality of function services, thereby providing experience of multi-window task execution for the user.

Based on the foregoing embodiment, preset levels of the function entries provided on the first application interface include not only a first preset level, but also a function entry of a second preset level lower than the first preset level. Function entries of the first preset level can implement smooth switching mentioned in the foregoing embodiment. To be specific, in the embodiment of the present disclosure, different function entries are pre-classified into different levels based on service types of the function services. A function entry of a same entry level as the application homepage corresponding to the first application is of the first preset level, and quick switching between function entries of a same level as the application homepage is implemented in combinations in the form of "tiles".

To reflect switching experience of function services corresponding to function entries of different levels, and improve flexibility of the function services, for a function service corresponding to the second preset level, the function service may be provided based on an original function service logic of the function service.

In an embodiment of the present disclosure, when an entry level of the target function entry is the second preset level, the second application corresponding to the target function entry is determined. For example, as shown in Fig. 8, when the target function entry is a video a3 entry of the second preset level, the second application corresponding to the target function entry is determined as a video application C, the second application is opened, and the first application interface is visually replaced and displayed as the second application interface corresponding to the function application. The second display layer may be rendered on the first application interface in the virtual reality space, and the second application interface of the second application is displayed on the second display layer. To be specific, with continued reference to Fig. 8, the first application interface is replaced and displayed as the video interface of C, and the video interface is the second application interface corresponding to C, thereby providing visual experience of entering function services of different levels for the user, and making the user sense, visually, that the function service form of the second preset level is different from the function service form of the first preset level.

In the embodiment of the present disclosure, to further improve smoothness of switching from the second application interface to the first application interface, a replacement animation from the first application interface to the second application interface may be further displayed, and when playing of the replacement animation ends, the first application interface is switched to the second application interface. The second application interface is a current real-time service interface of the corresponding function application. For example, the second application interface is a real-time video interface currently pushed by a short video application, or the like.

In an embodiment of the present disclosure, an exit path from the second application interface to the first application interface is further provided. To be specific, corresponding to an exit operation on the function application interface, the function application is closed, and the second application interface is replaced and displayed as the first application interface corresponding to the first application. In different application scenarios, manners of the exit operation on the function application are different. For example, with continued reference to Fig. 8, an exit control may be displayed at the bottom of the second application interface, and the exit operation may be a trigger operation on the exit control, or the like. In another optional embodiment, the exit operation may alternatively be performed in the form of a gesture, speech and so on, which is not limited one by one herein.

In conclusion, the human-computer interaction method in the embodiment of the present disclosure may further provide an application function entry of a second application. When the second application function entry is triggered, a second display layer is rendered, and a second application interface is displayed on the second display layer, so as to provide richer experience of switching display from the function entry to the display page.

The embodiment of the present disclosure is applicable to a human-computer interaction scenario. It is considered that operating systems of electronic devices such as an extended reality (XR) device and installed applications are constantly upgraded and updated. However, due to unfamiliarity to the updated operating system or application, it is difficult for the user to find some functions or operations. However, it takes high costs for the user to learn how to use the updated operating system or application. Therefore, how to enable the user to quickly master the updated operating system or application becomes a problem that urgently needs to be resolved currently. For this problem, at least one embodiment of the present disclosure further provides a display method, to display, by using this method, a plurality of function controls related to display content, so that the user performs human-computer interaction with the electronic device based on the displayed function controls, thereby improving human-computer interaction efficiency.

The following describes in detail a method for displaying prompt information according to an embodiment of the present disclosure with reference to figures.

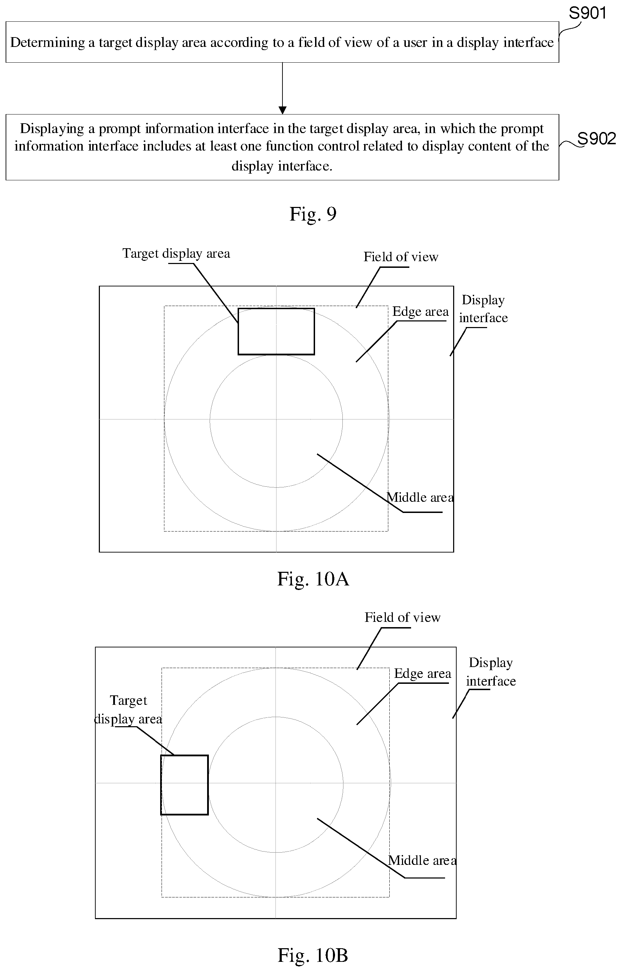

Fig. 9 is a schematic flowchart of a method for displaying prompt information according to an embodiment of the present disclosure. The embodiment of the present disclosure is applicable to a human-computer interaction scenario, and the method for displaying prompt information may be performed by an apparatus for displaying prompt information. The apparatus for displaying prompt information may be composed of hardware and/or software, and may be integrated in an electronic device.

In the embodiment of the present disclosure, the electronic device may be any hardware device that has a human-computer interaction function. In the embodiment of the present disclosure, the electronic device may be but is not limited to an XR device, a tablet computer, a desktop computer, and other devices. The XR device may be a VR device, an AR device, an MR device, or the like, which is not specifically limited in the present disclosure. In the embodiment of the present disclosure, the electronic device is preferably the XR device.

As shown in Fig. 9, the method may include the following steps.

S901, Determining a target display area according to a field of view of a user in a display interface.

In some embodiments of the present disclosure, the display interface may be an interface corresponding to an application currently run by an electronic device, for example, may be the first application interface or the second application interface mentioned above. In some other embodiments of the present disclosure, the display interface may be a display area (for example, a main display area) in the application interface currently run by the electronic device, for example, may be the main interface display area in the first application interface. In some other embodiments of the present disclosure, the display interface may be an interface corresponding to an operating system currently run by the electronic device. The display interface may be a virtual scene interface or another scene interface, and which is not specifically limited herein.

It should be noted that, if the interface corresponding to the currently run application, or the display area in the application interface is displayed in full screen, or the interface corresponding to the currently run operating system is displayed in full screen, the display interface may overlap the display screen of the electronic device.

It is considered that although field of view angles of human eyes are broad, visions that can cause visual nerve excitation are mostly concentrated in the middle area of the field of view. In particular, after the user wears a device that can provide a virtual scene, compared with the case in which the user does not wear the device that provides a virtual scene, in terms of the field of view of the user, visions are more concentrated in the middle area of the field of view. The middle area is approximately: using an astigmatic axis of human eyes as a center point, approximately 55 degrees to the left, approximately 55 degrees to the right, approximately 60 degrees to the above direction, and approximately 40 degrees to the below. Certainly, the middle area may alternatively be adaptively adjusted based on device types, or the like, which is not specifically limited herein.

Therefore, in the present disclosure, when the target display area is determined, a principle that human eyes are insensitive to edges of the field of view is used to determine the field of view of the user in the display interface. Then, the edge area of the field of view is determined as the target display area. In this way, when the user can normally watch the display content, some function operations related to the display content can be actively displayed to the user, so as to provide conditions for operating efficiency of the user.

In other words, in the present disclosure, the edge area of the field of view of the user is used as the target display area, so as to subsequently display, in the target display area, function controls related to the display content, thereby actively displaying some relevant function controls to the user based on reducing interference to watch the display content by the user.

In the embodiment of the present disclosure, determining the field of view of the user in the display interface may be implemented in different manners, for example, may be implemented in the following manners.

First manner: based on a preset calculation manner, an axis (that is, an astigmatic axis of human eyes) of the user is used as a center point, and the field of the view of the user is calculated by using a first angle to the left, a second angle to the right, a third angle to the above, and a fourth angle to the below. The first angle, the second angle, the third angle, and the fourth angle may be adaptively set based on the type of the electronic device, and are not specifically limited herein.

For example, using a VR device as an example, the first angle may be set to 55 degrees, the second angle may be set to 55 degrees, the third angle may be set to 60 degrees, and the fourth angle may be set to 40 degrees.

Second manner: a preset field of view is used as the field of the view of the user in the display interface.

For example, the preset field of view is a fixed range set by the electronic device (for example, the XR device) based on features of human eyes. For example, the preset field of view is approximately 55 degrees to the left, approximately 55 degrees to the right, approximately 60 degrees to the above, and approximately 40 degrees to the below.

In other words, in the embodiment of the present disclosure, the preset field of the view of the electronic device may be determined as the field of view of the user in the display interface.

After the field of the view of the user in the display interface is determined, in the embodiment of the present disclosure, the edge area may be determined from the field of view, and the edge area is determined as the target display area. For example, an area that is in the field of view and that uses an axis as a center point, and that is formed by approximately 30 degrees to the left, approximately 30 degrees to the right, approximately 20 degrees to the above, and approximately 12 degrees to the below is used as the middle area, and the remaining area is used as the target display area.

It is considered that the edge area of the field of view may be located on the periphery of the middle area. Therefore, in the embodiment of the present disclosure, determining the edge area of the field of view as the target display area may include the following cases.

### Case 1

An edge area above the field of view is used as the target display area.

For example, as shown in Fig. 10A, the target display area is located in the edge area above the field of view.

### Case 2

An edge area on the left of the field of view is used as the target display area.

For example, as shown in Fig. 10B, the target display area is located in the edge area on the left of the field of view.

### Case 3

An edge area on the right of the field of view is used as the target display area.

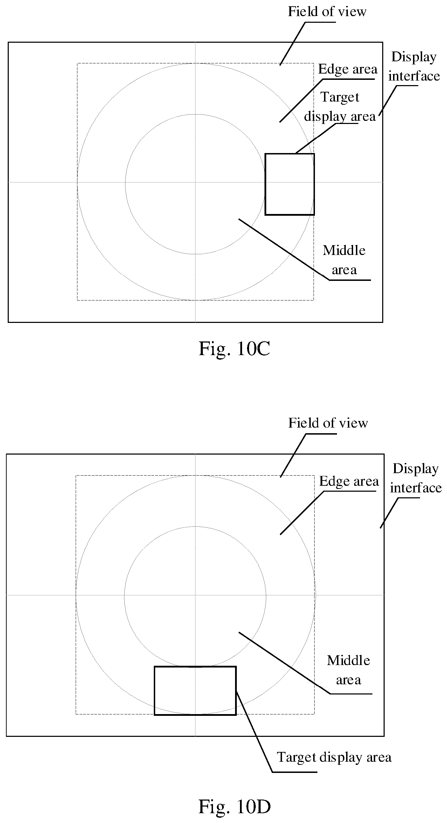

For example, as shown in Fig. 10C, the target display area is located in the edge area on the right of the field of view.

### Case 4

An edge area below the field of view is used as the target display area.

For example, as shown in Fig. 10D, the target display area is located in the edge area below the field of view.

It should be noted that, the foregoing four cases are only used as example descriptions of the embodiment of the present disclosure, and are not used as specific limitations on the present disclosure.

S102: Displaying a prompt information interface in the target display area, in which the prompt information interface includes at least one function control related to display content of the display interface.

In the embodiment of the present disclosure, the function control in the prompt information interface may be determined based on the relevance of the display content, or may be determined based on operating preference of the user, which is not specifically limited herein. The operating preference of the user may be determined by collecting operating data of the user and analyzing the operating data, or may be determined through surveying based on the operating preference, or the like.

Exemplary, after the target display area is determined, in the embodiment of the present disclosure, one or more function controls related to the display content may be displayed in the target display area in the form of display elements in the prompt information interface. Therefore, the user may trigger any function control in the prompt information interface, to perform human-computer interaction with the electronic device, so as to facilitate the user in performing the desired function operation, thereby improving use satisfaction of the user.

To describe the embodiment of the present disclosure clearly, the following describes displayed function controls by using different display content as examples.

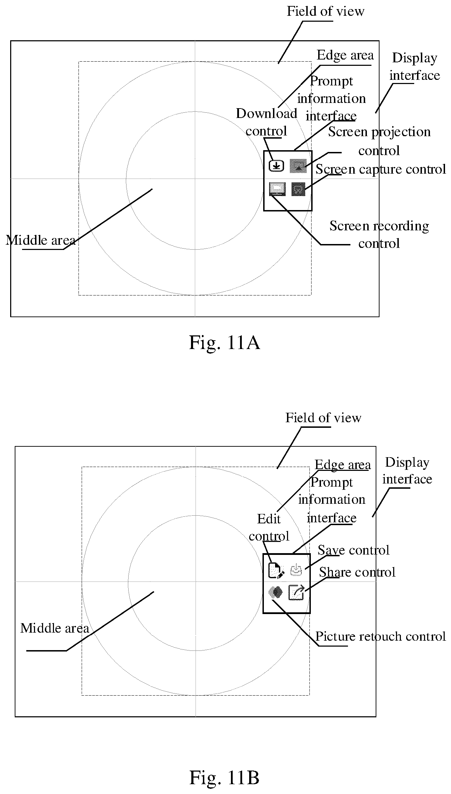

For example, if the display content is video content, for example, a TV drama, a movie, or a variety show, the prompt information interface displayed in the target display area includes at least one of the following function controls: a download control, a screen projection control, a screen recording control, and a screen capture control, for example, as shown in Fig. 11A.

If the display content is picture content, for example, a photo, the prompt information interface displayed in the target display area includes at least one of the following function controls: an edit control, a save control, a picture retouch control, and a share control, for example, as shown in Fig. 11B.

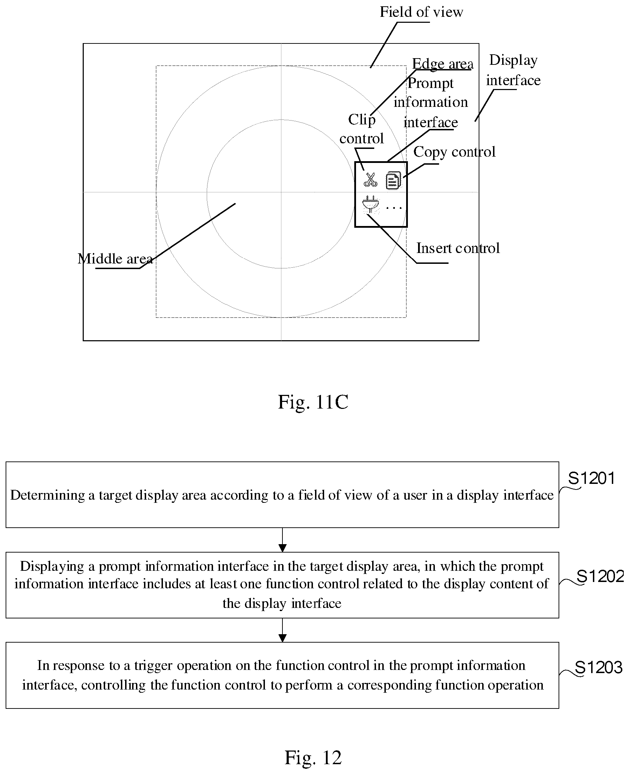

If the display content is document content, for example, a table or texts, the prompt information interface displayed in the target display area includes at least one of the following function controls: a clip control, a copy control, and an insert control, for example, as shown in Fig. 11C.

Certainly, in addition to the foregoing exemplary descriptions, in the present disclosure, at least one function control related to the display content may be displayed in the prompt information interface based on the display content of other types, and this is not specifically limited in the present disclosure.

It may be understood that, in the embodiment of the present disclosure, the target display area is determined in the display interface, and the prompt information interface including the at least one function control related to the display content is displayed in the target display area. In this way, the user can conveniently and efficiently perform human-computer interaction with the electronic device based on the displayed function control, to reduce learning costs of the user, and shorten a human-computer interaction step, thereby improving operating efficiency of the user.

In the method for displaying prompt information provided by the embodiment of the present disclosure, the target display area is determined according to the field of view of the user in the display interface, to display the prompt information interface in the target display area, in which the prompt information interface includes at least one function control related to the display content of the display interface. In the embodiment of the present disclosure, the prompt information is displayed in the field of view, so that the user can quickly master an updated operating system or application based on the prompt information, to effectively improve human-computer interaction efficiency, thereby improving use experience of the user.

It can be learned based on the foregoing descriptions that, in the embodiment of the present disclosure, the at least one function control related to the display content is displayed in the display interface, so that the user can perform human-computer interaction with the electronic device based on the displayed function control, thereby improving human-computer interaction efficiency.

In an optional implementation, it is considered that after the at least one function control related to the display content is displayed in the target display area, the user may need to use any function control, to achieve a desired operating objective. Then, the following further describes the method for displaying prompt information according to an embodiment of the present disclosure with reference to Fig. 12.

As shown in Fig. 12, the method may include the following steps.

S1201: Determining a target display area according to a field of view of a user in a display interface.

S1202: Displaying a prompt information interface in the target display area, in which the prompt information interface includes at least one function control related to the display content of the display interface.

S1203: In response to a trigger operation on the function control in the prompt information interface, controlling the function control to perform a corresponding function operation.

It is considered that when watching picture content displayed by the electronic device, the user may need to operate the display content, for example, save, share, or take a screenshot of the display content. In addition, one or more function controls related to the display content are displayed in the target display area of the display interface. Therefore, the user may trigger, based on an operating requirement, the function control located in the prompt information interface by using a peripheral apparatus or in a manner of a gesture operation (for example, tapping or selection), to perform a corresponding operation on the display content by using the triggered function control. Alternatively, when the electronic device has an eye movement tracking function, the user may alternatively trigger, based on the eye movement tracking function, the function control located in the prompt information interface, or the like, which is not specifically limited herein.

The peripheral apparatus may be a device that is arbitrarily worn on a hand of the user, for example, a handle, a glove, a bracelet, a finger ring, a wristband, a handheld controller, or the like, which is not specifically limited herein.

In other words, in the embodiment of the present disclosure, a control instruction sent by the user may be received, to control a function control corresponding to a function control identifier carried in the control instruction to perform a corresponding function operation, so as to implement a human-computer interaction operation. The function control identifier may indicate position information of the function control, or the like, which is not specifically limited herein.

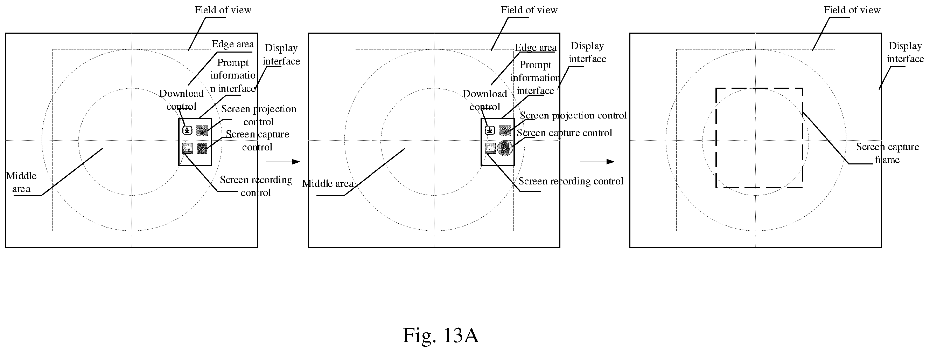

Exemplary, if the display content is video content, for example, a TV drama or a movie, when the user needs to perform a screen capture operation on the displayed video content, the user may trigger a screen capture control in the prompt information interface by using a peripheral apparatus or in a manner of a gesture operation, to perform a screen capture operation on the currently displayed video content through the screen capture control, as shown in Fig. 13A.

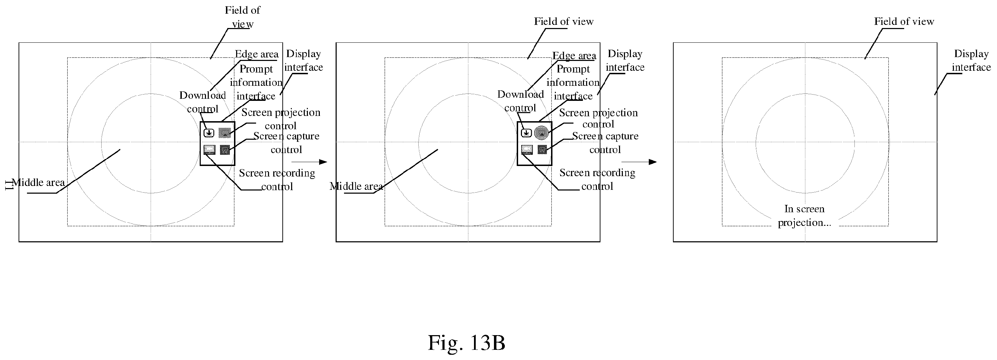

If the display content is video content, for example, a TV drama or a movie, when the user needs to perform a screen projection operation on the displayed video content, the user may trigger a screen projection control in the prompt information interface by using a peripheral apparatus or in a manner of a gesture operation, to project displayed video content to another display device by using the screen projection control, as shown in Fig. 13B. During screen projection, the user may select a device on which screen projection is to be performed from a plurality of communicatively connected devices, so as to project the video content to the device on which screen projection is to be performed. A specific implementation process is a common means, which is not described in detail herein.

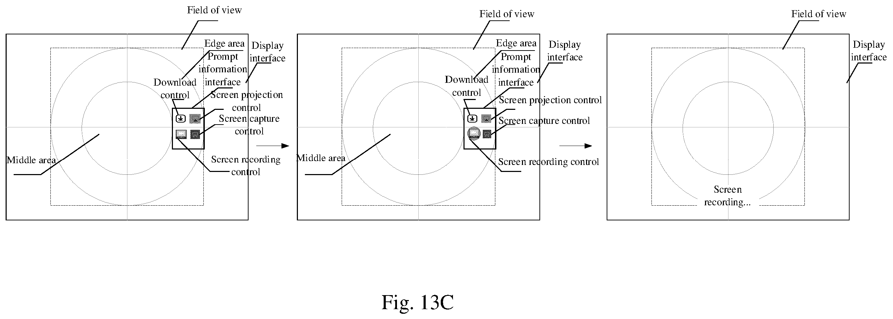

If the display content is video content, for example, a TV drama or a movie, when the user needs to perform a screen recording operation on the displayed video content, the user may trigger a screen recording control in the prompt information interface by using a peripheral apparatus or in a manner of a gesture operation, to perform a screen recording operation on the displayed video content by using the screen recording control, as shown in Fig. 13C.

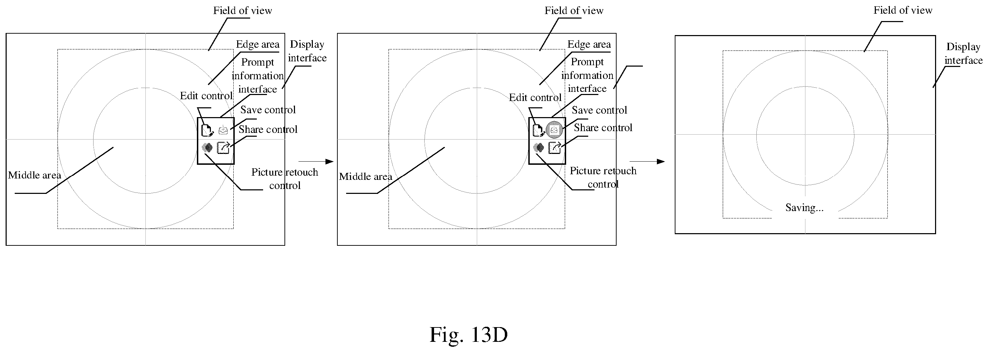

If the display content is picture content, for example, a photo, when the user needs to save the displayed picture, the user may trigger a save control in the prompt information interface by using a peripheral apparatus or in a manner of a gesture operation, to save the picture by using the save control, as shown in Fig. 13D.

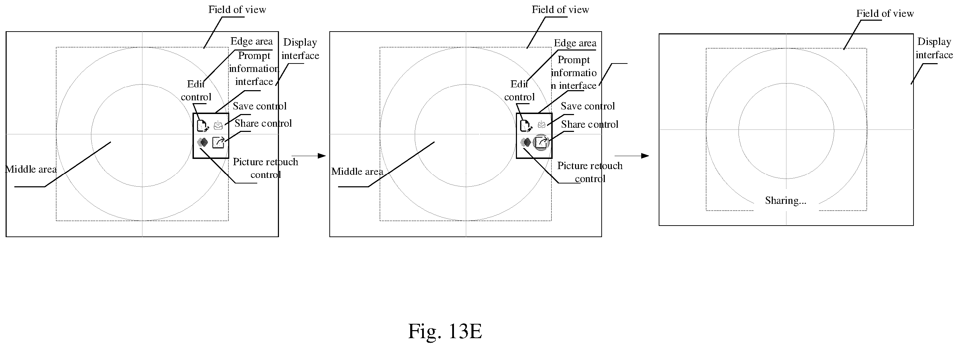

If the display content is picture content, for example, a photo, when the user needs to share the displayed picture, the user may trigger a share control in the prompt information interface by using a peripheral apparatus or in a manner of a gesture operation, to share the image with friends by using the share control, as shown in Fig. 13E. The user may select to-be-shared friend information during sharing, and select the friend, so as to share the picture with the friend. Certainly, the user may also share the picture with a non-friend, and this may be specifically flexibly adjusted based on an actual application requirement, which is not specifically limited herein.

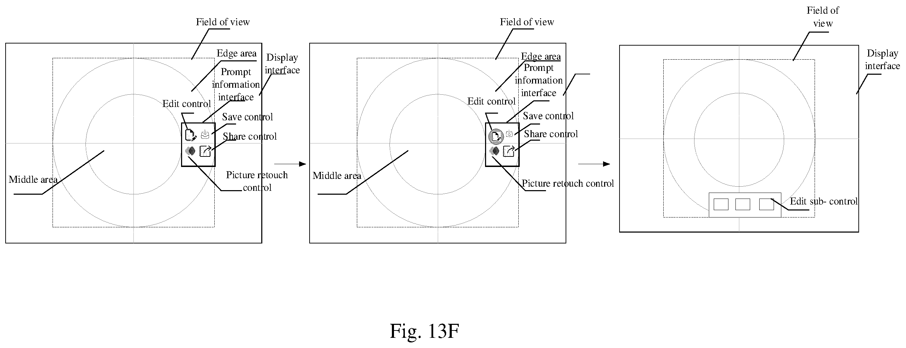

If the display content is picture content, for example, a photo, when the user needs to edit the displayed picture, the user may trigger an edit control in the prompt information interface by using a peripheral apparatus or in a manner of a gesture operation, to perform an edit operation on the image by using the edit control, as shown in Fig. 13F.

Of course, in addition to the foregoing exemplary descriptions, in the embodiment of the present disclosure, the function control in the prompt information interface may be triggered based on other display content, to perform a corresponding function operation through the function control, which is not specifically limited in the present disclosure.

In the method for displaying prompt information provided in the embodiment of the present disclosure, the target display area is determined according to the field of view of the user in the display interface, to display the prompt information interface in the target display area, in which the prompt information interface includes at least one function control related to display content of the display interface. In the embodiment of the present disclosure, the prompt information is displayed in the field of view, so that the user can quickly master an updated operating system or application based on the prompt information, to effectively improve human-computer interaction efficiency, thereby improving use experience of the user. In addition, any function control in the prompt information interface is triggered to perform a corresponding function operation, to meet an operating requirement of the user, and also shorten a human-computer interaction step, thereby improving operating efficiency.

In another optional implementation of the embodiment of the present disclosure, it is considered that the prompt information interface displayed in the target display area affects, more or less, watching, by the user, the display content in the display interface. Therefore, in the embodiment of the present disclosure, a display control may be disposed in the prompt information interface, so that the user adjusts a display state of the prompt information interface by triggering the display control, thereby reducing interference of the prompt information interface to watch the display content by the user. The following further describes the method for displaying prompt information according to an embodiment of the present disclosure with reference to Fig. 6.

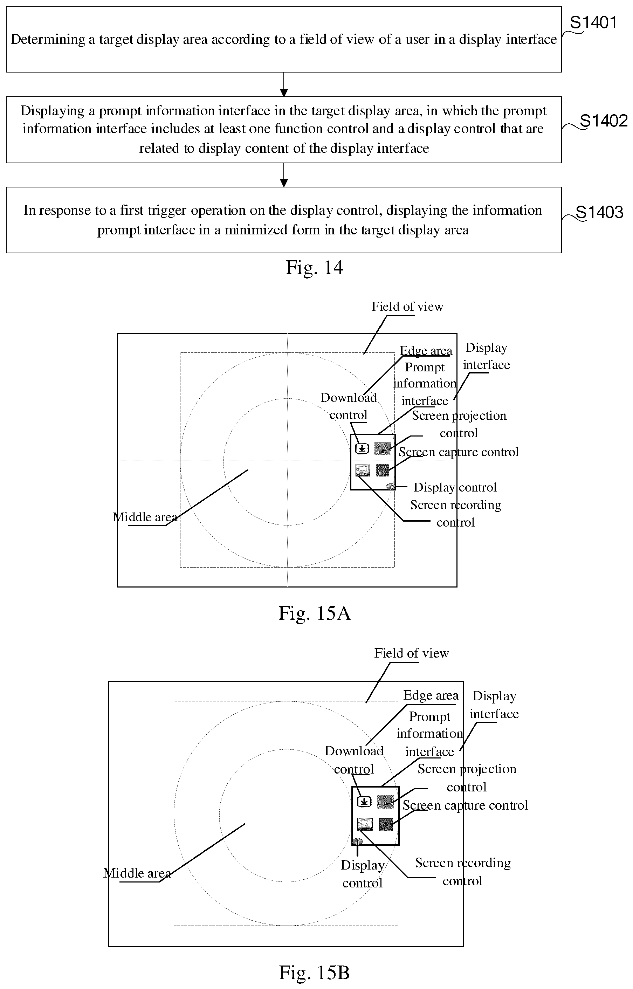

As shown in Fig. 14, the method may include the following steps.

S1401: Determining a target display area according to a field of view of a user in a display interface.

S1402: Displaying a prompt information interface in the target display area, in which the prompt information interface includes at least one function control and a display control that are related to display content of the display interface.

S1403: In response to a first trigger operation on the display control, displaying the information prompt interface in a minimized form in the target display area.

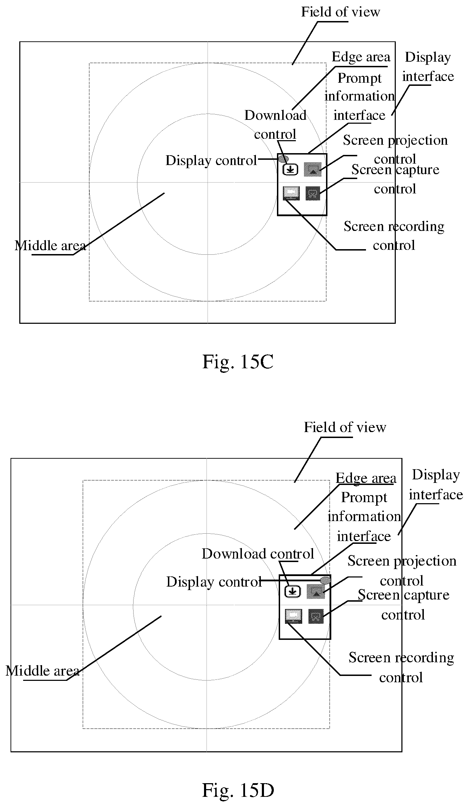

The display control may be located at any vertex angle position of the prompt information interface, specifically as shown in Fig. 15A to Fig. 15D. In other words, the display control is disposed at the vertex angle position of the prompt information interface, to prevent the display control from blocking normal display of the function control, to ensure that the function control is always in the state of being visible to the user.

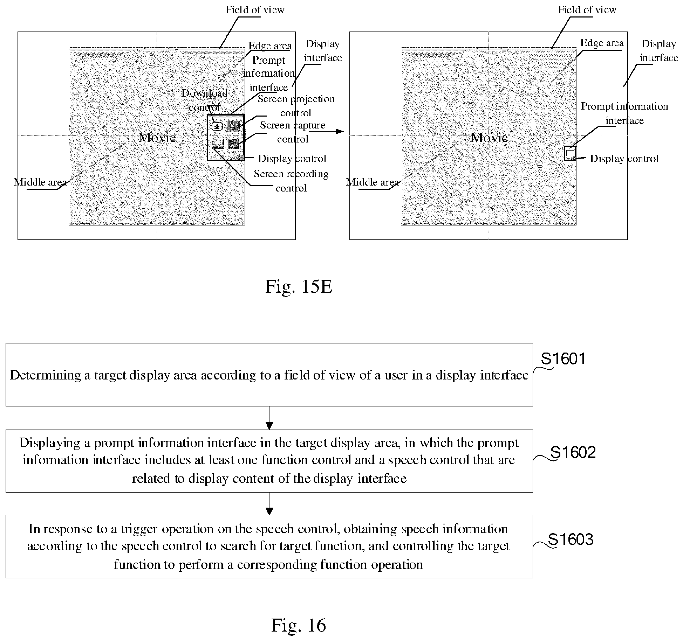

It is considered that the prompt information interface displayed in the target display area causes interference to watch the display content by the user. Therefore, the user may trigger a display control located on the prompt information interface by using a peripheral apparatus or in a manner of a gesture operation, to fold the prompt information interface to a minimum state by using the display control. Then, the prompt information interface in the minimum state is displayed in the target display area, to reduce interference to watch the display content by the user. A specific implementation process is shown in Fig. 15E.

In an optional implementation, in the embodiment of the present disclosure, a timer may be further disposed for the prompt information interface. If the time of the timer reaches preset duration, and the user does not trigger any function control, a display control is automatically triggered, to fold the prompt information interface to the minimum state by using the display control. In addition, the prompt information interface in the minimum state is displayed in the target display area, which is not specifically limited herein.

In which, the preset duration may be set by the device end by default, or may be manually set by the user based on a requirement, which is not specifically limited herein. For example, the preset duration is 5 minutes (min) or 10 min.

Further, after the prompt information interface is folded to the minimum state, if the user wants to use any function control in the prompt information interface, the user may trigger, once again, the display control located on the prompt information interface in the minimum state by using a peripheral apparatus or in a manner of a gesture operation. Then, the display control may restore the prompt information interface in the minimum state to a normal state based on a trigger operation of the user, and display the prompt information interface in the normal state in the target display area. Further, the user may select a desired function control in the prompt information interface that is normally displayed, to perform a corresponding function operation by using the function control.

In other words, the embodiment of the present disclosure further includes: in response to a second trigger operation on the display control, displaying the prompt information interface in a normal form in the target display area.

In the method for displaying prompt information provided by the embodiment of the present disclosure, the target display area is determined according to the field of view of the user in the display interface, to display the prompt information interface in the target display area, in which the prompt information interface includes at least one function control related to display content of the display interface. In the present disclosure, the prompt information is displayed in the field of view, so that the user can quickly master an updated operating system or application based on the prompt information, to effectively improve human-computer interaction efficiency, thereby improving use experience of the user. In addition, a display state of the prompt information interface is adjusted through a trigger operation of the user on the display control, to reduce interference caused by displaying of the prompt information interface to watch the display content by the user, so as to further meet a use requirement of the user.

In another optional implementation, it is considered that none of function controls displayed in the prompt information interface are function controls desired by the user. Therefore, to meet an operating requirement of the user, in the embodiment of the present disclosure, a speech control may be further disposed in the prompt information interface. When none of the function controls in the prompt information interface meet the use requirement of the user, the user may trigger the speech control to perform speech search, to search for a desired target function. With reference to Fig. 16, the following specifically describes the foregoing solutions provided by the embodiment of the present disclosure.

As shown in Fig. 16, the method may include the following steps.

S1601: Determining a target display area according to a field of view of a user in a display interface.

S1602: Displaying a prompt information interface in the target display area, in which the prompt information interface includes at least one function control and a speech control that are related to display content of the display interface.

S1603: In response to a trigger operation on the speech control, obtaining speech information according to the speech control to search for target function, and controlling the target function to perform a corresponding function operation.

When the user needs to operate the display content, there is no desired function control in the prompt information interface located in the target display area. In this case, the user may trigger a speech control located in the prompt information interface by using a peripheral apparatus or in a manner of a gesture operation, to collect speech information of the user by using the speech control. Then, the electronic device performs speech recognition based on the speech information collected by the speech control, and searches all functions for the corresponding target function based on a speech recognition result. After the target function is found, the target function may be started, and the target function is controlled to perform a corresponding function operation. In this way, the speech control located in the prompt information interface can prevent the user from manually searching for a desired function, to achieve the effect of simplifying operating steps, and can also ensure that the user can always obtain any desired function, to further improve human-computer interaction efficiency.

In which performing speech recognition based on the speech information collected by the speech control, and searching all functions for the corresponding target function based on a speech recognition result are conventional technologies in the art, which are not described in detail herein.

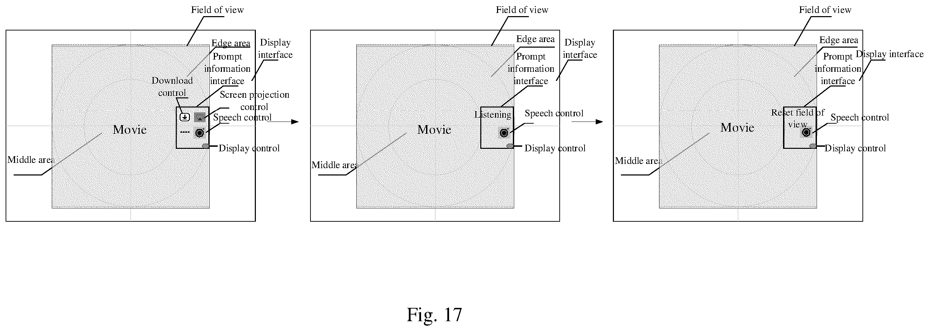

For the foregoing implementation function, reference may be made to Fig. 17. It should be noted that, when the target function is controlled to perform the corresponding function operation, in the present disclosure, a resetting operation is further preformed on the display interface, to eliminate a display content offset caused by a calculation deviation, thereby avoiding the case in which the display content is not located within the field of view of the user.

In the method for displaying prompt information provided by the embodiment of the present disclosure, the target display area is determined according to the field of view of the user in the display interface, to display the prompt information interface in the target display area, in which the prompt information interface includes at least one function control related to display content of the display interface. In the embodiment of the present disclosure, the prompt information is displayed in the field of view, so that the user can quickly master an updated operating system or application based on the prompt information, to effectively improve human-computer interaction efficiency, thereby improving use experience of the user. In addition, the speech control located in the prompt information interface can prevent the user from manually searching for a desired function, to achieve the effect of simplifying operating steps and shortening a search step, and can also ensure that the user can always obtain any desired function, to further improve human-computer interaction efficiency.

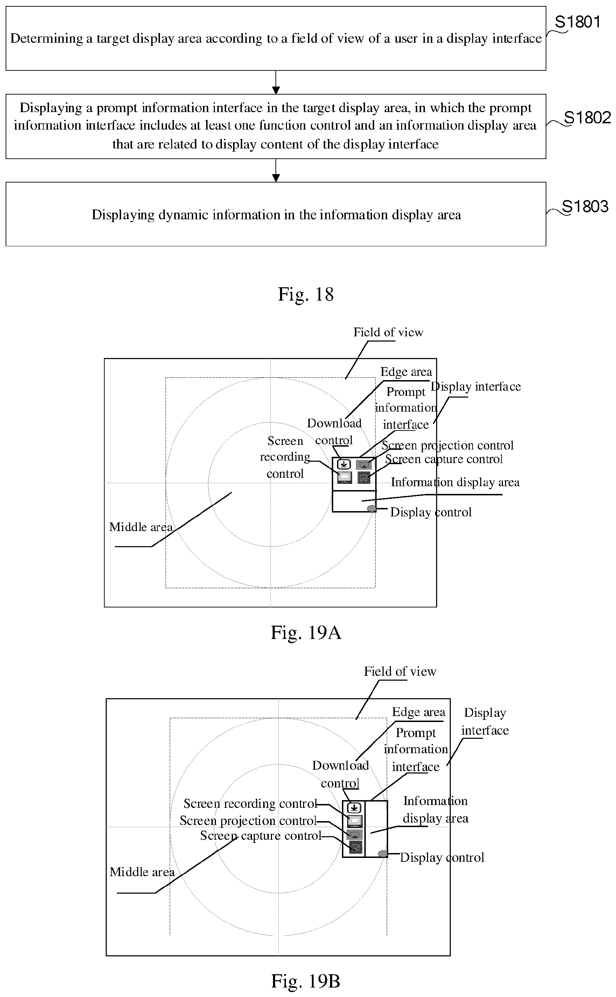

In another optional implementation in the embodiment of the present disclosure, in the embodiment of the present disclosure, an information display area may be further disposed in the prompt information interface, to display dynamic information to the user by using the information display area, so that the user can view important dynamic information without exiting from the current interface to re-reach the corresponding application. With reference to Fig. 18, the following specifically describes the foregoing solutions provided by the embodiment of the present disclosure.

As shown in Fig. 18, the method may include the following steps.

S1801: Determining a target display area according to a field of view of a user in a display interface.

S1802: Displaying a prompt information interface in the target display area, in which the prompt information interface includes at least one function control and an information display area that are related to display content of the display interface.

S1803: Displaying dynamic information in the information display area.

The information display area may be flexibly disposed in the information prompt interface based on actual application requirements, for example, as shown in the setting manner shown in Fig. 19A and Fig. 19B.

It is considered that in a process in which the user uses the electronic device, the background may run another application, and the another application may receive or generate new dynamic information at any time. For example, an instant messaging application receives a new message, a news application pushes new hot news, or weather information. Therefore, in the embodiment of the present disclosure, an information display area may be further disposed in the prompt information interface, to display dynamic information to the user by using the information display area, so that the user can view important dynamic information without exiting from the current interface to re-reach the corresponding application.

In an optional implementation, in the embodiment of the present disclosure, recommendation information related to the display content may be further displayed in the information display area based on the display content of the display interface.

Exemplary, if the display content is video content, such as a movie, information such as another movie or a TV drama in which main actors in the movie have participated is obtained based on the main actors in the movie. Then, obtained information such as a name and an icon of the another movie or TV drama is displayed in the information display area. In this way, the user can quickly obtain, based on the recommendation information, movies or TV dramas in which actors who the user likes have participated, so as to improve viscosity of the user.

For another example, if the display content is a delicious food program, a delicious food store name, a delicious food store address, required food materials, and other information are obtained based on the delicious food program. Then, the obtained information such as the food store name, the delicious food store address, and the required food materials is displayed in the information display area. In this way, the user can quickly obtain, based on the recommendation information, the delicious food, the delicious food store, cooking materials, and cooking manners that meet the preference of the user, so as to improve viscosity of the user.

In the method for displaying prompt information provided by the embodiment of the present disclosure, the target display area is determined according to the field of view of the user in the display interface, to display the prompt information interface in the target display area, in which the prompt information interface includes at least one function control related to display content of the display interface. In the embodiment of the present disclosure, the prompt information is displayed in the field of view, so that the user can quickly master an updated operating system or application based on the prompt information, to effectively improve human-computer interaction efficiency, thereby improving use experience of the user. In addition, the information display area is disposed in the prompt information interface, to display the dynamic information to the user by using the information display area, so that the user can view important dynamic information without exiting from the current display interface to re-enter another application, to shorten operating steps of the user, thereby improving viscosity of the user.

To implement the foregoing embodiments, an embodiment of the present disclosure further provides a human-computer interaction apparatus.

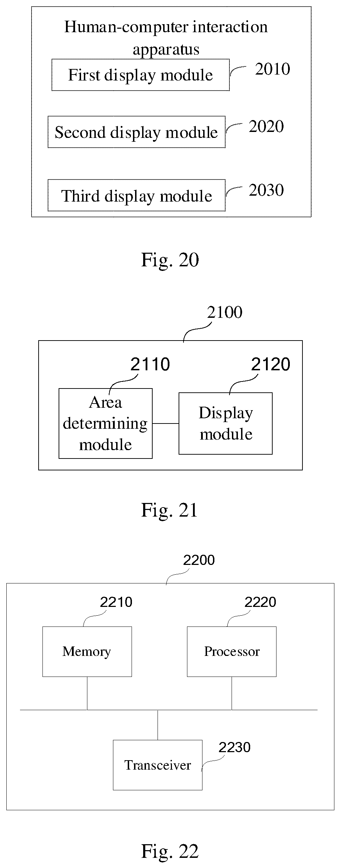

Fig. 20 is a schematic block diagram of a human-computer interaction apparatus according to an embodiment of the present disclosure. The apparatus may be implemented by software and/or hardware, and may be usually integrated in an electronic device for human-computer interaction. As shown in Fig. 20, the apparatus includes: a first display module 2010, a second display module 2020, and a third display module 2030.

The first display module 2010 is configured to display a first application interface when receiving an instruction for opening a first application.

The first application interface includes a main interface display area and an associated display area, the associated display area is used to display a plurality of candidate function entries, and the main interface display area is used to display a display page of a currently invoked function.

The second display module 2020 is configured to in response to an instruction for opening a target function entry in the associated display area, fold the display page of the currently invoked function, and display a function entry of the currently invoked function in the associated display area.

The third display module 2030 is configured to display a display page of the target function in the main interface display area.

The human-computer interaction apparatus provided by the embodiment of the present disclosure can perform the human-computer interaction method provided in any one of the embodiments of the present disclosure, and has corresponding function modules for performing the method and beneficial effects.

An embodiment of the present disclosure further provides an apparatus for displaying prompt information.

The following describes an apparatus for displaying prompt information according to an embodiment of the present disclosure with reference to Fig. 21. Fig. 21 is a schematic block diagram of an apparatus for displaying prompt information according to an embodiment of the present disclosure.

In which, the apparatus 2100 for displaying prompt information includes: an area determining module 2110 and a display module 2120.

In which, the area determining module 2110 is configured to determine a target display area according to a field of view of a user in a display interface.

The display module 2120 is configured to display a prompt information interface in the target display area, in which the prompt information interface includes at least one function control related to the display content of the display interface.

In an optional implementation of the embodiment of the present disclosure, the area determining module 610 includes a first determining unit and a second determining unit.

In which, the first determining unit is configured to determine the field of view of the user in the display interface.

The second determining unit is configured to determine an edge area of the field of view as the target display area.

In an optional implementation of the embodiment of the present disclosure, the apparatus 2100 for displaying prompt information further includes a first response module.

In which, the first response module is configured to in response to a trigger operation on the function control in the prompt information interface, control the function control to perform a corresponding function operation.

In an optional implementation of the embodiment of the present disclosure, the prompt information interface further includes: a display control.

Correspondingly, the apparatus 2100 for displaying prompt information further includes a second response module.

In which, the second response module is configured to in response to a first trigger operation on the display control, display the prompt information interface in a minimized form in the target display area.

In an optional implementation of the embodiment of the present disclosure,
the second response module is further configured to in response to a second trigger operation on the display control, display the prompt information interface in a normal form in the target display area.

In an optional implementation of the embodiment of the present disclosure, the prompt information interface further includes: a speech control.

Correspondingly, the apparatus 2100 for displaying prompt information further includes a third response module.

In which, the third response module is configured to in response to a trigger operation on the speech control, obtain a speech information search target function according to the speech control, and control the target function to perform a corresponding function operation.

In an optional implementation of the embodiment of the present disclosure, the prompt information interface further includes: an information display area.

Correspondingly, the apparatus 2100 for displaying prompt information further includes a second display module.

The second display module is configured to display dynamic information in the information display area; or, display recommendation information related to the display content in the information display area according to the display content of the display interface.

According to the apparatus for displaying prompt information provided by the present disclosure, the target display area is determined according to the field of view of the user in the display interface, to display the prompt information interface in the target display area, in which the prompt information interface includes at least one function control related to display content of the display interface. In the embodiment of the present disclosure, the prompt information is displayed in the field of view, so that the user can quickly master an updated operating system or application based on the prompt information, to effectively improve human-computer interaction efficiency, thereby improving use experience of the user.

It should be understood that the apparatus embodiments may correspond to the foregoing method embodiments, and for similar descriptions, reference may be made to the method embodiments. To avoid repetition, details are not described herein again. Specifically, the apparatus 2100 shown in Fig. 21 may perform the method embodiment corresponding to Fig. 9. In addition, the foregoing and other operations and/or functions of the modules in the apparatus 2100 are respectively intended to implement corresponding procedures of the methods in Fig. 9. For brevity, details are not described herein again.

The foregoing describes the apparatus 2100 in the embodiment of the present disclosure from the perspective of the function module. It should be understood that, the function module may be implemented in a hardware form, may be implemented through instructions in a software form, or may be implemented through a combination of hardware and software modules. Specifically, steps of the method embodiment in embodiments of the present disclosure may be completed through an integrated logic circuit and/or instructions in a software form in a processor. Steps of the method for displaying prompt information disclosed with reference to embodiments of the present disclosure may be directly performed by a hardware decoding processor, or may be performed by using a combination of hardware and software modules in the decoding processor. Optionally, the software module may be located in a mature storage medium in the art, such as a random access memory, a flash memory, a read-only memory, a programmable read-only memory, an electrically erasable programmable memory, or a register. The storage medium is located in the memory, and the processor reads the information in the memory and completes the steps in the foregoing embodiments of the method for displaying prompt information in combination with hardware of the processor.

To implement the foregoing embodiments, the present disclosure further provides a computer program product, which includes a computer program/instruction, in which when the computer program/instruction is executed by a processor, the human-computer interaction method and/or display method in the foregoing embodiments are/is implemented.

Fig. 22 is a schematic block diagram of an electronic device according to an embodiment of the present disclosure. As shown in Fig. 22, the electronic device 700 may include:
a memory 2210 and a processor 2220, in which the memory 2210 is configured to store a computer program, and transmit the program code to the processor 2220. In other words, the processor 2220 may invoke the computer program from the memory 2210 and run the computer program, to implement the human-computer interaction method and/or the method for displaying prompt information in embodiments of the present disclosure.

For example, the processor 2220 may be configured to perform the embodiments of the human-computer interaction method and/or the method for displaying prompt information according to instructions in the computer program.

In some embodiments of the present disclosure, the processor 2220 may include but is not limited to:
a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic device, a discrete gate or a transistor logic device, a discrete hardware component, or the like.

In some embodiments of the present disclosure, the memory 2210 includes but is not limited to:
a volatile memory and/or a non-volatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (Random Access Memory, RAM), used as an external cache. Through example but not limitative descriptions, many forms of RAMs may be used, for example, a static random access memory (SRAM), a dynamic random access memory ( DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct rambus random access memory (DR RAM).

In some embodiments of the present disclosure, the computer program may be divided into one or more modules. The one or more modules are stored in the memory 2210, and are executed by the processor 2220, to complete the human-computer interaction method and/or the method for displaying prompt information provided in embodiments of the present disclosure. The one or more modules may be a series of computer program instruction segments that can complete specific functions, in which the instruction segments are used to describe an execution process of the computer program in the electronic device.

As shown in Fig. 22, the electronic device may further include:
a transceiver 2230, in which the transceiver 2230 may be connected to the processor 2220 or the memory 2210.

The processor 2220 may control the transceiver 2230 to communicate with another device. Specifically, information or data may be sent to the another device, or information or data sent by the another device may be received. The transceiver 2230 may include a transmitter and a receiver. The transceiver 2230 may further include an antenna, and there may be one or more antennas.

It should be understood that, the components in the electronic device are connected through a bus system. In addition to a data bus, the bus system further includes a power bus, a control bus, and a status signal bus.

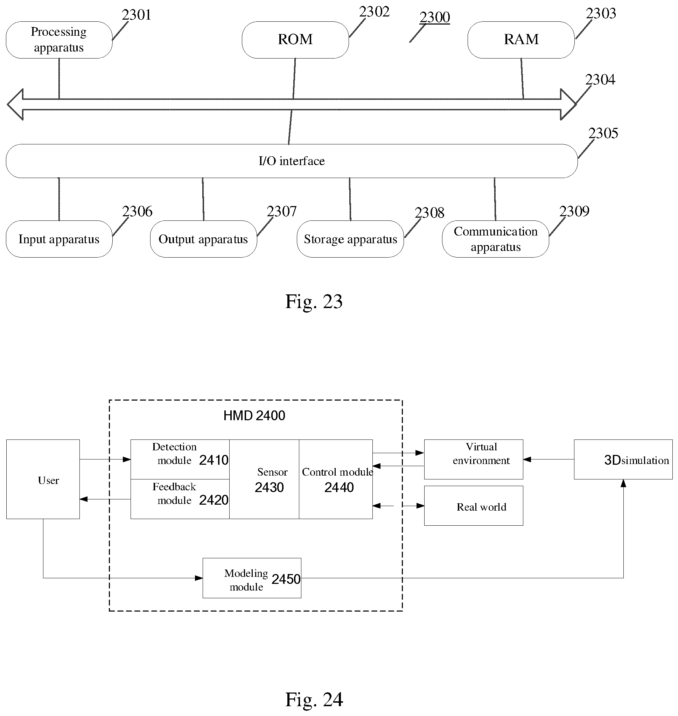

Fig. 23 is a schematic block diagram of another electronic device according to an embodiment of the present disclosure.

The following specifically shows a schematic diagram of a structure of an electronic device 2300 according to an embodiment of the present disclosure with reference to Fig. 23. The electronic device 2300 in the embodiment of the present disclosure may include, but not limited to, a mobile terminal such as a mobile phone, a notebook computer, a digital broadcast receiver, a PDA (personal digital assistant), a PAD (tablet computer), a PMP (portable multimedia player), and a vehicle-mounted terminal (such as a vehicle-mounted navigation terminal), as well as a fixed terminal such as a digital TV and a desktop computer. The electronic device shown in Fig. 23 is merely an example, and should not constitute any limitation on functions and use scope of embodiments of the present disclosure.

As shown in Fig. 23, the electronic device 2300 may include a processing apparatus (such as a central processing unit, and a graphics processor) 2301, it may execute various appropriate actions and processes according to a program stored in a read-only memory (ROM) 2302 or a program loaded from a storage apparatus 2308 to a random access memory (RAM) 2303. In RAM 2303, various programs and data required for operations of the electronic device 2300 are also stored. The processing apparatus 2301, ROM 2302, and RAM 2303 are connected to each other by a bus 2304. An input/output (I/O) interface 2305 is also connected to the bus 2304.

Typically, the following apparatuses may be connected to the I/O interface 2305: an input apparatus 2306 such as a touch screen, a touchpad, a keyboard, a mouse, a camera, a microphone, an accelerometer, and a gyroscope; an output apparatus 2307 such as a liquid crystal display (LCD), a loudspeaker, and a vibrator; a storage apparatus 2308 such as a magnetic tape, and a hard disk drive; and a communication apparatus 2309. The communication apparatus 2309 may allow the electronic device 2300 to wireless-communicate or wire-communicate with other devices so as to exchange data. Although Fig. 23 shows the electronic device 2300 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 2309, or installed from the storage apparatus 2308, or installed from ROM 2302. When the computer program is executed by the processing apparatus 2301, the above functions defined in the sight line tracking method in the embodiments of the present disclosure are executed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and upon the one or more programs being executed by the electronic device, the electronic device is caused to: execute the human-computer interaction method and/or method for displaying prompt information in the embodiments of the present disclosure.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In embodiments of the present disclosure, when the electronic device is an HMD, an embodiment of the present disclosure provides a schematic block diagram of an HMD, as shown in Fig. 24.

As shown in Fig. 24, main function modules of the HMD 800 may include but are not limited to the following: a detection module 2410, a feedback module 2420, a sensor 2430, a control module 2440, and a modeling module 2450.

In which the detection module 2410 is configured to detect an operating command of the user by using various sensors, and apply the operating command to a virtual environment, for example, constantly update an image displayed on a display following lines of sight of the user, to implement interaction between the user and the virtual scene.

The feedback module 2420 is configured to: receive data from the sensor, and provide real-time feedbacks for the user. For example, the feedback module 2420 may generate a feedback instruction based on user operation data, and output the feedback instruction.

On one hand, the sensor 2430 is configured to receive the operating command from the user, and apply the operating command to the virtual environment. On the other hand, the sensor 2430 is configured to feed back results generated after operation for the user in a various feedback forms.

The control module 2440 is configured to control the sensor and various input/output apparatuses, which includes obtaining data of the user such as actions and speech and outputting perception data, such as images, vibrations, temperatures, and sounds, to act on the user, the virtual environment, and the real world. For example, the control module 2440 may obtain a gesture, speech, and the like of the user.

The modeling module 2450 is configured to construct a three-dimensional model of the virtual environment, and may further include sound, touch, and other feedback mechanisms in the three-dimensional model.

It should be understood that, the function modules in the HMD 2400 are connected through a bus system. In addition to a data bus, the bus system further includes a power bus, a control bus, a status signal bus, and the like.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A human-computer interaction method, comprising the following steps:
displaying a first application interface when receiving an instruction for opening a first application, wherein
the first application interface comprises a main interface display area and an associated display area, the associated display area is used to display a plurality of candidate function entries, and the main interface display area is used to display a display page of a currently invoked function;
in response to an instruction for opening a target function entry in the associated display area, folding the display page of the currently invoked function, and displaying a function entry of the currently invoked function in the associated display area; and
displaying a display page of the target function in the main interface display area.

2. The method according to claim 1, wherein the displaying a first application interface comprises:
generating a first display layer in a virtual reality space, and rendering and displaying the first application interface on the first display layer.

3. The method according to claim 1 or 2, wherein the folding the display page of the currently invoked function, and displaying a function entry of the currently invoked function in the associated display area comprises:
displaying preset folding prompt information of the display page of the currently invoked function to the function entry of the currently invoked function, and when displaying of the folding prompt information ends, folding the display page of the currently invoked function as the function entry of the currently invoked function displayed in the associated display area.

4. The method according to any one of claims 1 to 3, wherein the displaying a display page of the target function in the main interface display area comprises:
displaying unfolding prompt information of the target function entry to the display page of the target function, and when displaying of the unfolding prompt information ends, unfolding the target function entry as the display page of the target function displayed in the main interface display area.

5. The method according to any one of claims 1 to 4, wherein before the displaying a display page of the target function in the main interface display area, the method further comprises:
determining a historical function page when the target function folds last time; and
determining that the historical function page is the display page of the target function.

6. The method according to any one of claims 1 to 5, wherein the folding the display page of the currently invoked function, and displaying a function entry of the currently invoked function in the associated display area comprises:
folding the display page of the currently invoked function as the function entry of the currently invoked function displayed in a first associated display sub-area in response to that the display page of the currently invoked function is an application homepage of the first application;
folding the display page of the currently invoked function as the function entry of the currently invoked function displayed in a second associated display sub-area in response to that the display page of the currently invoked function is not the application homepage of the first application, wherein the first associated display sub-area and the second associated display sub-area are located at different directions of the main interface display area.

7. The method according to claim 6, wherein the folding the display page of the currently invoked function as the function entry of the currently invoked function displayed in a second associated display sub-area comprises:
determining an initial display position of the function entry of the currently invoked function in the second associated display sub-area; and
folding the display page of the currently invoked function as the function entry of the currently invoked function displayed at the initial display position.

8. The method according to any one of claims 1 to 7, further comprising:
in response to an instruction for opening an application entry corresponding to a second application in the associated display area, generating a second display layer on the first application interface, and rendering and displaying a second application interface of the second application on the second display layer.

9. A method for displaying prompt information, comprising:
determining a target display area according to a field of view of a user in a display interface; and
displaying a prompt information interface in the target display area, wherein the prompt information interface comprises at least one function control related to display content of the display interface.

10. The method according to claim 9, wherein the determining a target display area according to a field of view of a user in a display interface comprises:
determining the field of view of the user in the display interface; and
determining an edge area of the field of view as the target display area.

11. The method according to claim 9 or 10, further comprising:
in response to a trigger operation on the function control in the prompt information interface, controlling the function control to perform a corresponding function operation.

12. The method according to any one of claims 9 to 11, wherein the prompt information interface further comprises: a display control; and
the method further comprises:
in response to a first trigger operation on the display control, displaying the prompt information interface in a minimized form in the target display area.

13. The method according to claim 12, further comprising:
in response to a second trigger operation on the display control, displaying the prompt information interface in a normal form in the target display area.

14. The method according to any one of claims 9 to 11, wherein the prompt information interface further comprises: a speech control; and
the method further comprises:
in response to a trigger operation on the speech control, obtaining speech information according to the speech control to search for target function, and controlling the target function to perform a corresponding function operation.

15. The method according to any one of claims 9 to **11,** wherein the prompt information interface further comprises: an information display area; and
the method further comprises:
displaying dynamic information in the information display area;
or,
displaying recommendation information related to the display interface in the information display area according to the display content of the display interface.

16. A human-computer interaction apparatus, comprising:
a first display module, configured to display a first application interface when receiving an instruction for opening a first application, wherein
the first application interface comprises a main interface display area and an associated display area, the associated display area is used to display a plurality of candidate function entries, and the main interface display area is used to display a display page of a currently invoked function;
a second display module, configured to in response to an instruction for opening a target function entry in the associated display area, fold the display page of the currently invoked function, and display a function entry of the currently invoked function in the associated display area; and
a third display module, configured to display a display page of the target function in the main interface display area.

17. An electronic device, wherein the electronic device comprises:
a processor; and
a memory, configured to store instructions that can be executed by the processor, wherein
the processor is configured to read the executable instructions from the memory, and execute the executable instructions, to implement the method according to any one of claims 1 to 15.

18. A computer-readable storage medium, wherein the computer-readable storage medium stores a computer program, and the computer program is used to perform the method according to any one of claims 1 to 15.
